# EUROPÄISCHE PATENTSCHRIFT

(11) **EP 0 668 495 B1**
(45) Veröffentlichungstag und Bekanntmachung des Hinweises auf die Patenterteilung: **26.04.2000**
(21) Anmeldenummer: 95101524.7
(22) Anmeldetag: 04.02.1995
(51) Int. Cl.: G01M 15/00

(54) **Messanlage für Brennkraftmaschinen-Abgaspartikel (Russ)**
Measuring installation for the exhaust particles (soot) of combustion engines
Installation de mesure des particules d'échappement (suie) des moteurs à combustion

(30) Priorität: 17.02.1994 DE 4404947
(43) Veröffentlichungstag der Anmeldung: 23.08.1995
(73) Patentinhaber: Pierburg Aktiengesellschaft, 41460 Neuss (DE)
(72) Erfinder: Dickow, Achim, D-42555 Velbert (DE)

(56) Entgegenhaltungen:
- DE-A- 4 017 473

## Beschreibung

Die Erfindung betrifft eine Meßanlage für Brennkraftmaschinen-Abgaspartikel (Ruß) sowie ein Verfahren zum Betreiben dieser Meßanlage nach dem Oberbegriff des Anspruchs 1 sowie des Anspruchs 2.

Es ist bereits bekannt, eine Messung von verdünntem Rohabgas durchzuführen, da heiße unverdünnte Abgase nicht gemessen werden können, wobei das Verdünnungsverhältnis dadurch festgestellt wird, daß z. B. eine Abgaskomponente des unverdünnten Rohabgases gemessen wird und ins Verhältnis zu der im verdünnten Abgas gemessenen gleichen Abgaskomponente gesetzt wird.

Dieses Verfahren kann bei der gattungsgemäßen Meßanlage nicht verwendet werden, da bei dieser keine gasförmigen Abgasbestandteile gemessen werden, sondern nur feste, z. B. Ruß.

In der DE 40 17 473 ist eine Meßeinrichtung offenbart, bei der die Menge des verdünnten Abgasprobenstroms durch einen Massenstrommesser festgestellt wird, der durch das Abgas belastet ist und zum Ausfall neigt.

Hiervon ausgehend liegt der Erfindung die Aufgabe zugrunde, Möglichkeiten aufzufinden, mit denen ohne größeren Aufwand der durch die Meßanlage gesaugte Abgasprobenstrom ermittelt werden kann.

Diese Aufgabe ist durch die im Kennzeichen des Patentanspruchs 1 und 2 angegebenen Merkmale gelöst worden.

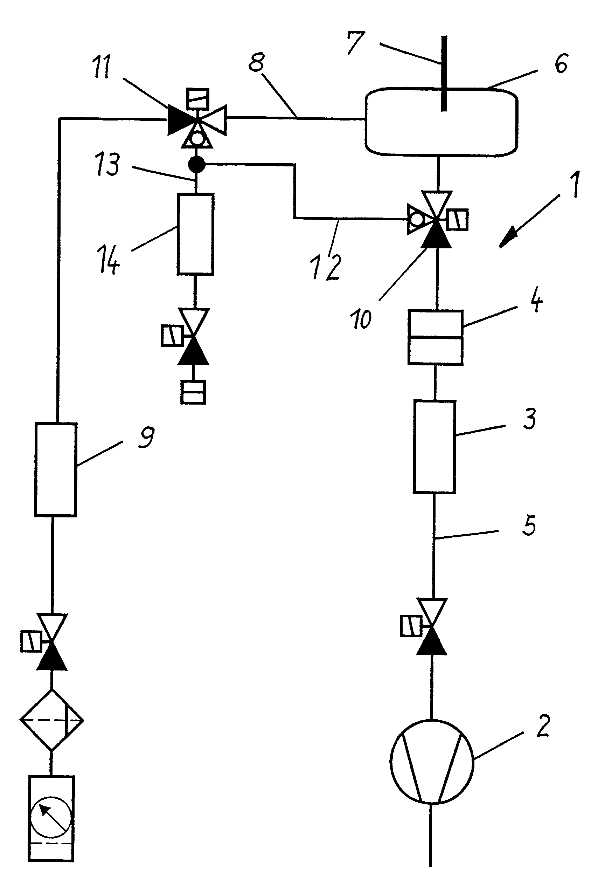

In der Zeichnung ist eine Meßanlage schematisch dargestellt und wird nachfolgend beschrieben.

Die Zeichnung zeigt die Meßanlage 1 bestehend aus einer Luftpumpe 2, einem Massenstromregler 3 und einem Meßfilter 4, verbunden durch eine Ansaugleitung 5, die stromab der Luftpumpe 2 in die Atmosphäre führt und stromauf des Meßfilters 4 über einen Teil der Ansaugleitung 5 in einen Mischabschnitt 6, in den eine mit einer Abgasanlage einer Brennkraftmaschine verbundene Probenleitung 7 sowie eine mit der Atmosphäre verbundene Luftleitung 8 einmünden. Diese Luftleitung 8 weist ebenfalls einen Massenstromregler 9 auf. In dem Mischabschnitt 6 wird angesaugtes Abgas mit ebenfalls angesaugter Verdünnungsluft verdünnt und gekühlt.

Diese Meßanlage 1 entspricht soweit dem Stand der Technik, wobei der Massenstromregler 3 in der Ansaugleitung 5 auf einen bestimmten Massenstrom und der zweite Massenstromregler 9 in der Luftleitung 8 auf einen Massenstrom eingestellt wird, der kleiner als der des ersten Massenstromreglers 3 ist.

Die Differenz zwischen beiden Massenströmen wird durch den angesaugten Abgasprobenstrom ergänzt, der somit aus der Differenz ermittelt wird. Obwohl die Massenstromregler 3, 9 mit sehr kleiner Toleranz arbeiten, bewirken diese bei dem angestrebten Verdünnungsverhältnis erhebliche Meßfehler in bezug auf die Abgasprobenmenge.

Erfindungsgemäß ist nun vorgesehen, daß stromauf und stromab des Mischabschnitts 6 in der Luft- und der Ansaugleitung 8 und 5 Schaltventile 10, 11 angeordnet sind, die mit einer Bypassleitung 12 zum Mischabschnitt 6 verbindbar sind, so daß die Luft- und Ansaugleitung 8 und 5 entweder mit dem Mischabschnitt 6 oder mit der Bypassleitung 12 verbindbar sind, wobei die Bypassleitung 12 mit einer weiteren Luftleitung 13 zur Atmosphäre verbunden ist, in der ein Massenstrommesser 14 angeordnet ist.

Mit dieser erfindungsgemäßen Ausbildung eignet sich die Meßanlage 1 zur Durchführung des angegebenen Verfahrens, daß in Meßphasen die Schaltventile 10, 11 in Richtung Mischabschnitt 6 und während Ruhephasen (Konditionierungsphasen) in Richtung der Bypassleitung 12 geschaltet werden, wobei der vom Massenstrommesser 14 gemessene Luftstrom dem in Meßphasen angesaugten Abgasprobenstrom gleichgesetzt und ins Verhältnis zum/zur in der Meßphase ermittelten Partikelgewicht/-menge gesetzt wird.

Damit läßt sich unabhängig von toleranzbedingten Abweichungen der Massenströme durch Vergleich des durch den Massenstrommesser 14 angezeigten Bypassluftstrom, dieser wird durch den Massenstrommesser hochgenau ermittelt, auf den bei Umschaltung der Schaltventile 10, 11 einsetzenden Abgasprobenstrom schließen. Damit kann der ermittelte Abgasprobenstrom mit dem im Meßfilter 4 ermittelten Abgaspartikelanfall ins Verhältnis gesetzt werden.

## Patentansprüche

1. Meßanlage für Brennkraftmaschinen-Abgaspartikel, Ruß, mit einer Probenleitung (7) für den Abgasprobenstrom, mit einer Luftleitung (8) für Atmosphärenluft, die in einen Mischabschnitt (6) der Probenleitung (7) einmündet, wobei der Mischabschnitt (6) über eine Ansaugleitung (5) mit einem Meßfilter (4) verbunden ist, durch den der im Mischabschnitt (6) verdünnte und abgekühlte Abgasprobenstrom gesaugt wird, dadurch gekennzeichnet, daß stromauf und stromab des Mischabschnitts (6) in der Luft- und Ansaugleitung (8 und 5) Schaltventile (10, 11) angeordnet sind, die mit einer Bypassleitung (12) zum Mischabschnitt (6) verbindbar sind, so daß die Luft- und Ansaugleitung (8 und 5) entweder mit dem Mischabschnitt (6) oder mit der Bypassleitung (12) verbindbar sind, wobei die Bypassleitung (12) mit einer weiteren Luftleitung (13) zur Atmosphäre verbunden ist, in der ein Massenstrommesser (14) angeordnet ist.

2. Verfahren zum Betreiben einer Meßanlage nach Anspruch 1, dadurch gekennzeichnet, daß in Meßphasen die Schaltventile (10, 11) in Richtung Mischabschnitt (6) und während Ruhephasen, Konditionierungsphasen, in Richtung der Bypassleitung (12) geschaltet werden, wobei der vom Massenstrommesser (14) gemessene Luftstrom dem in Meßphasen angesaugten Abgasprobenstrom gleichgesetzt und ins Verhältnis zum/zur in der Meßphase ermittelten Partikelgewicht/-menge gesetzt wird.

## Claims

1. Measuring arrangement for exhaust-gas particles, soot, pertaining to internal-combustion engines, with a sample line (7) for the sample stream of exhaust gas, with an air line (8) for atmospheric air, which discharges into a mixing section (6) of the sample line (7), the mixing section (6) being connected via a suction line (5) to a measuring filter (4), through which the sample stream of exhaust gas which is rarefied in the mixing section (6) and cooled is aspirated, characterised in that upstream and downstream of the mixing section (6) in the air line and in the suction line (8 and 5) there are arranged switch valves (10, 11) which are capable of being connected to a bypass line (12) relative to the mixing section (6), so that the air line and suction line (8 and 5) are capable of being connected either to the mixing section (6) or to the bypass line (12), the bypass line (12) being connected to an additional air line (13) leading to the atmosphere, in which a mass-flow meter (14) is arranged.

2. Process for operating a measuring arrangement according to Claim 1, characterised in that the switch valves (10, 11) are switched in the direction of the mixing section (6) in measuring phases and are switched in the direction of the bypass line (12) during rest phases, conditioning phases, the air stream measured by the mass-flow meter (1) being equated to the sample stream of exhaust gas aspirated in measuring phases and being set in proportion to the particle weight/quantity ascertained in the measuring phase.

## Revendications

1. Installation de mesure des particules des gaz d'échappement (suie) des moteurs à combustion interne, comportant une conduite d'échantillon (7) pour le courant d'échantillon de gaz d'échappement, une conduite d'air (8) pour de l'air atmosphérique qui débouche dans un tronçon de mélange (6) de la conduite d'échantillon (7), le tronçon de mélange (6) étant relié par une conduite d'aspiration (5) à un filtre de mesure (4) à travers lequel est aspiré le courant d'échantillon de gaz d'échappement dilué et refroidi dans le tronçon de mélange (6), caractérisé par le fait qu'en amont et en aval du tronçon de mélange (6) sont placées dans la conduite d'air (8) et la conduite d'aspiration (5) des vannes de commutation (10, 11) qui peuvent être reliées à une conduite de dérivation (12) contournant le tronçon de mélange (6), de sorte que la conduite d'air (8) et la conduite d'aspiration (5) peuvent être reliées soit au tronçon de mélange (6), soit à la conduite de dérivation (12), la conduite de dérivation (12) étant reliée à une autre conduite d'air (13) allant à l'atmosphère dans laquelle est placé un débitmètre de masse (14).

2. Procédé d'exploitation d'une installation de mesure selon la revendication 1, caractérisé par le fait que dans des phases de mesure, les vannes de commutation (10, 11) sont commutées en direction du tronçon de mesure (6) et pendant des phases de repos, des phases de conditionnement, elles sont commutées en direction de la conduite de dérivation (12), le débit d'air mesuré par le débitmètre de masse (14) étant rendu égal au débit d'échantillon de gaz d'échappement aspiré dans les phases de mesure et mis en rapport avec le poids ou la quantité de particules déterminé dans la phase de mesure.
